# EUROPÄISCHE PATENTSCHRIFT

(11) **EP 1 127 742 B1**
(45) Veröffentlichungstag und Bekanntmachung des Hinweises auf die Patenterteilung: **21.06.2006**
(21) Anmeldenummer: 01102890.9
(22) Anmeldetag: 15.02.2001
(51) Int. Cl.: B60Q 1/26

(54) **Ausgestaltung und Anordnung einer Positionsleuchte an einem Kraftfahrzeug, insbesondere Lastkraftwagen**
Configuration and arrangement of position lights for vehicle particularly for lorry
Configuration et arrangement pour feu de positionnement d'un véhicule en particulier un camion

(30) Priorität: 22.02.2000 AT 2622000
(43) Veröffentlichungstag der Anmeldung: 29.08.2001
(73) Patentinhaber: MAN Nutzfahrzeuge Österreich AG, 4400 Steyr (AT)
(72) Erfinder: Vogl, Markus, 4407 Steyr-Gleink (AT)

(56) Entgegenhaltungen:
- US-A- 5 669 697

## Beschreibung

Die Erfindung betrifft eine Positionsleuchte an einem Kraftfahrzeug, insbesondere Lastkraftwagen, mit Merkmalen wie im Oberbegriff des Anspruchs 1 angegeben.

Die Erfindung geht aus von einer aus der US-A-5669697 bekannten Art der Anordnung von Positionsleuchten an einem Kraftfahrzeug, insbesondere Lastkraftwagen, für die Fälle, wenn dieser entweder ohne oder mit Sonnenschutzblende ausgestattet ist. Dabei sind an der Fahrerhausfrontwand Aufnahmeräume für darin unterzubringende Positionsleuchten vorgesehen. In Spalte 6, Zeilen 37 bis 41 dieser US-Schrift ist ausgesagt, dass diese Lichtquellen auch als Lichtquellen an der Sonnenblende benutzbar sind und dass nach Entfernen dieser Lichtquellen aus ihren Aufnahmeräumen diese Aufnahmeräume bereit sind für die Befestigung der Sonnenschutzblende am Fahrzeug. Dabei sind an der Sonnenschutzblende Leuchtenfüße angeordnet, die bei der Montage der Sonnenschutzblende in die Aufnahmeräume eintauchen und dort jeweils mittels einer Schraubverbindung an der Fahrerhausfrontwand befestigbar sind. Über die Bauart und Ausgestaltung der besagten Positionsleuchten/Lichtquellen selbst und deren Anbringung sowohl an der Fahrerhausfrontwand als auch an der Sonnenschutzblende ist in der zitierten US-Schrift jedoch nichts offenbart.

Es ist demgegenüber Aufgabe der Erfindung, eine Positionsleuchte zu schaffen und Vorkehrungen zu treffen, die es ermöglichen, dass die Positionsleuchte in einfacher Weise unabhängig davon, ob eine Sonnenschutzblende vorgesehen ist oder nicht, in der einen oder anderen Position montierbar ist, außerdem Korrosionsprobleme am Kraftfahrzeug im Bereich der Positionsleuchtenanordnung vermeidbar sind und auch modernen Designansprüchen Rechnung getragen wird.

Diese Aufgabe ist erfindungsgemäß durch eine Positionsleuchte mit den im Anspruch 1 angegebenen Merkmalen gelöst.

Vorteilhafte Ausgestaltungen und Details dieser Erfindung sind in den Unteransprüchen gekennzeichnet. Da diese insgesamt ihre Stütze in der Figurenbeschreibung finden, ist an dieser Stelle auf deren wörtliche Zitierung verzichtet.

Die erfindungsgemäße Lösung hat den Vorteil, dass die Positionsleuchte unabhängig davon, ob eine Sonnenschutzblende am Kraftfahrzeug anzuordnen ist oder nicht, immer designmäßig optimal platziert ist. Außerdem ist sichergestellt, dass der der Kabeldurchführung und Leuchtenelektrikunterbringung dienende Durchbruch in der Kraftfahrzeug-Außenwand immer sauber abgedichtet ist - entweder durch den Positionsleuchten-Deckel oder den Leuchtenfuß. Korrosionsprobleme sind damit praktisch ausgeschaltet. Da dem Leuchtenfuß außerdem die Funktion eines Trägers für die Sonnenblende aufgeprägt ist, kann man sich an deren Stelle auch die ansonsten notwendigen Halter sparen.

Nachstehend ist die erfindungsgemäße Lösung anhand eines in der Zeichnung dargestellten Ausführungsbeispiels noch näher erläutert. In der Zeichnung zeigt:
- Fig. 1: in perspektivischer Ansicht einen Ausschnitt aus dem Fahrerhaus eines Last-kraftwagens mit angebauter Sonnenblende (keine Befestigungsmittel dargestellt),
- Fig. 2: einen Schnitt durch Darstellung von Fig. 1 entlang der Schnittlinie A-A,
- Fig. 3: die Anordnung der Positionsleuchte an der Kraftfahrzeugen-Außenwand, wenn keine Sonnenblende vorgesehen ist,
- Fig. 4: einen Schnitt durch die Darstellung von Fig. 2 entlang der Schnittlinie B-B,

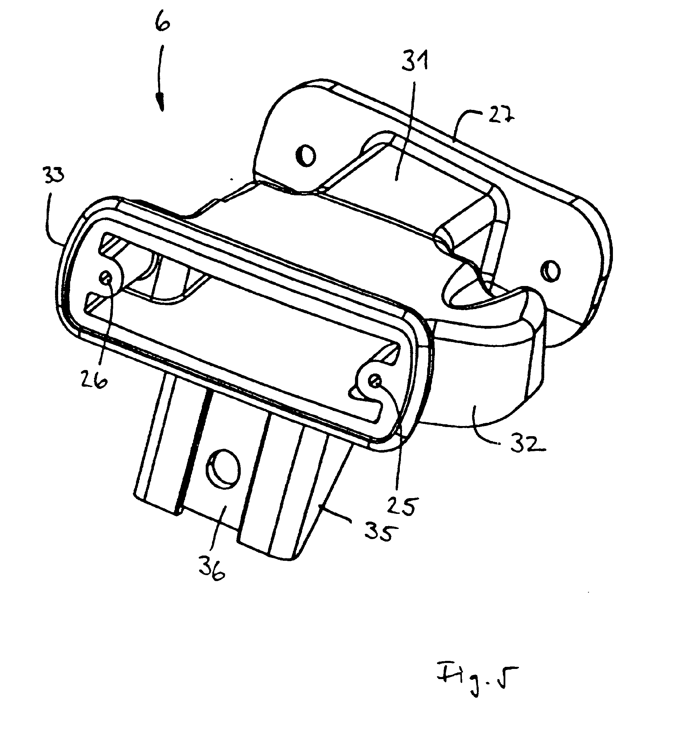

- Fig. 5: eine Ausführungsform des erfindungsgemäßen Leuchtenfußes.

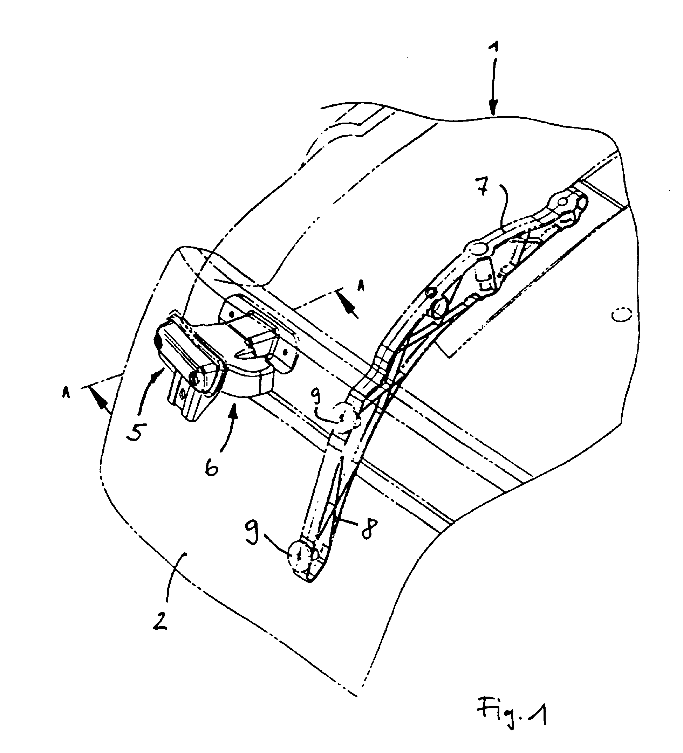

An dem in Fig. 1 ausschnittsweise dargestellten Fahrerhaus 1 eines Lastkraftwagens kann optional eine Sonnenblende 2 angebracht werden, derart, dass sie den oberen Bereich der Windschutzscheibe 3 überdeckt. Eine solche Sonnenblende 2 besteht üblicherweise aus teiltransparentem oder dunkel eingefärbtem, somit opak gemachtem Kunststoff. In Anbaulage erstreckt sich die Sonnenblende 2 im Abstand von einigen Zentimetern vor der Frontwand 4 des Fahrerhauses 1 über dessen gesamte Breite.

Außerdem ist an der Frontwand 4 des Fahrerhauses 1 oberhalb der Windschutzscheibe 3 und nahe zum jeweiligen seitlichen Rand hin gedrückt je eine Positionsleuchte 5 vorgesehen.

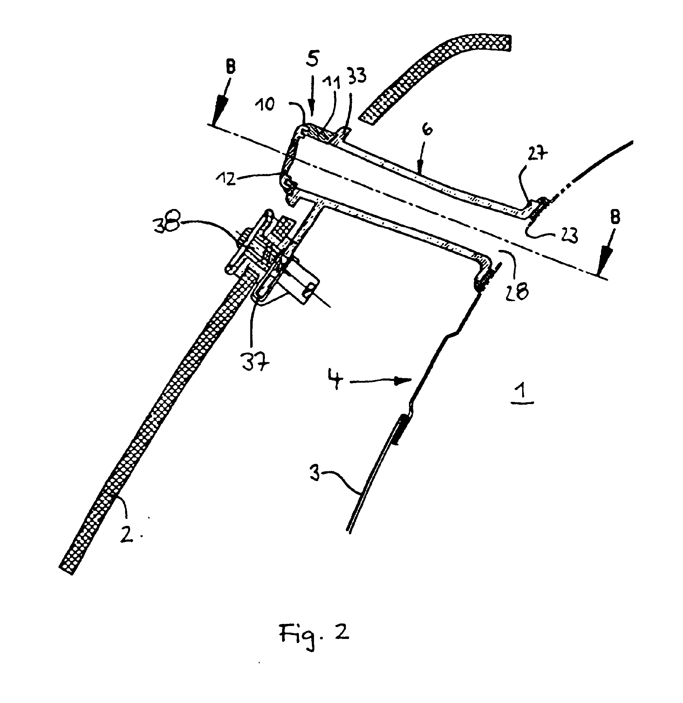

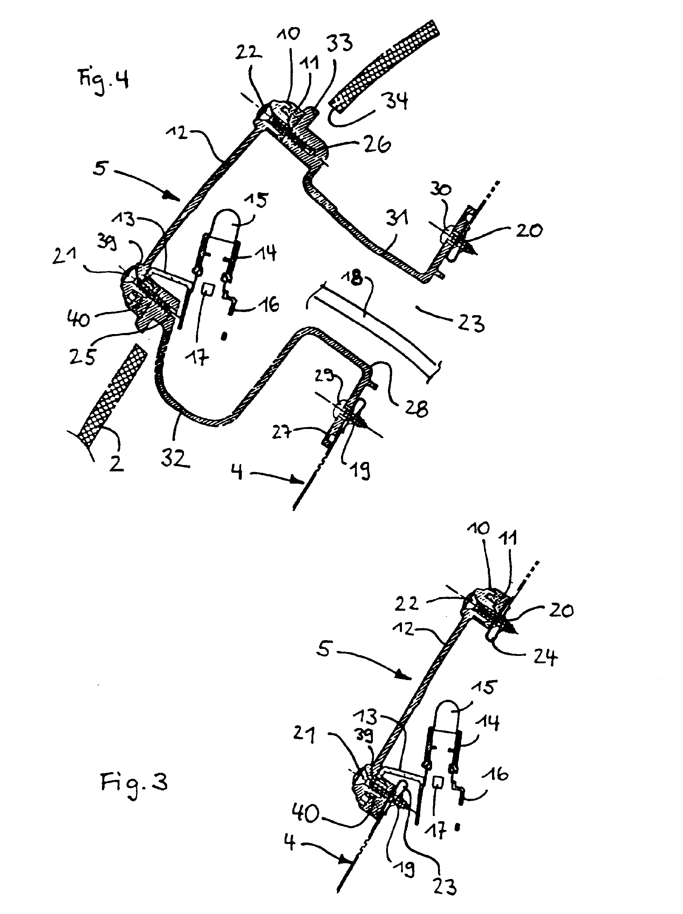

Die Erfindung besteht darin, dass die Positionsleuchte 5 dann, wenn keine Sonnenblende 2 vorgesehen ist, direkt an der Außenwand des Kraftfahrzeugs - im dargestellten Fall der Frontwand 4 - befestigt ist - siehe Fig. 3 -, dagegen wenn die Sonnenblende 2 vorgesehen ist, von der Außenwand/Frontwand 4 nach vorne in den Bereich der Sonnenblende 2 distanziert an einem Leuchtenfuß 6 angeordnet ist, der gleichzeitig als Träger für die an ihm abgestützt befestigbare Sonnenblende 2 ausgebildet und exakt an jener Stelle der Außenwand/Frontwand 4 befestigbar ist, an der andernfalls die Positionsleuchte säße. Die Version mit Sonnenblende 2 geht aus den Figuren 1, 2 und 4 hervor.

In Fig. 1 ist einer von zwei, gegebenenfalls drei Basishaltern 7 ersichtlich, die am Fahrerhaus-Dach 8 befestigt sind, außerdem der vorderen Lagerung eines Dachspoilers dienen und über die Dachvorderkante gehend nach unten vor die Frontwand 4 ragend abgewinkelt sind. An diesem abgewinkelten Bereich 8 sind Auflagescheiben 9 gegeben, an denen die Sonnenblende 2 anliegend befestigbar ist.

Die Sonnenblende 2 ist demzufolge in ihren mittleren bzw. inneren Bereich von den Basishaltern 7 getragen, dagegen in ihren Außenbereichen von den beiden Leuchtenfüßen 6.

Im dargestellten Beispiel besteht die Positionsleuchte 5 aus einem haubenartigen Deckel 10, der sich aus einem Randkörper 11 und einer transparenten Frontscheibe 12 zusammensetzt, sowie einem inneren Halter 13 und einem Sockel 16 daran mit einer Fassung 14 für die Aufnahme einer Lampe 15 und mit Steckkontakten 17 für den Anschluss eines Stromversorgungskabels 18.

Diese Positionsleuchte 5 ist, wenn keine Sonnenblende 2 vorgesehen, direkt an der Frontwand 4 mittels zweier, entsprechende Schraubenlöcher 19, 20 durchdringender Schrauben 21, 22 befestigbar. Der Halter 13 mit Sockel 16, Fassung 14 und Lampe 15 ist dann im Bereich einer Öffnung 23 der Frontwand 4 angeordnet - siehe Fig. 3. Die Schrauben 21, 22 sind durch geeignete Sicherungsmittel, z. B. Sicherungsbügel 23, 24 oder Sicherungsbleche, gegen ungewolltes Lösen gesichert.

Falls jedoch am Kraftfahrzeug eine Sonnenblende 2 angebracht wird, dann ist die Positionsleuchte 5 - wie aus Fig. 1, 2 und 4 ersichtlich - stirnseitig vorne am Leuchtenfuß 6 mittels der beiden in entsprechende Schraubenlöcher 25, 26 eingreifenden Schrauben 21, 22 befestigt.

Der Leuchtenfuß 6 weist im dargestellten Beispiel eine Grundplatte 27 mit einem Durchbruch 28 für die Durchführung des Stromversorgungskabels 18 auf. Mit dieser Grundplatte 27 ist der Leuchtenfuß 6 an der Außenwand/Frontwand 4 des Kraftfahrzeugs abgestützt und dort über Schrauben 29, 30, die die selben wie für die Befestigung des Deckels 10 vorgesehenen Schraubenlöcher 19, 20 durchdringen, befestigbar. Zur Vermeidung ungewollten Lösens stehen die Schrauben 29, 30 mit Sicherungselementen 23, 24 in Eingriff.

An der Grundplatte 27 schließt sich vorne ein hohler, der Durchführung des Stromversorgungskabels 18 dienender Mittelabschnitt 31 mit einer seitlichen Ausbuchtung 32 solcher Größe an, dass der Halter 13 mit Sockel 16 problemlos einbaubar und auch das Stromversorgungskabel 18 sauber verlegt an die Steckkontakte 17 herangeführt ist.

Am Mittelabschnitt 31 des Leuchtenfußes 6 schließt sich stirnseitig ein Auflageflansch 33 für die Abstützung und Befestigung des Deckels 10 an. In diesem Auflageflansch 33 sind die Schraubenlöcher 25, 26 gegeben, die zu jenen 19, 20 in der Kraftfahrzeug-Außenwand/Frontwand 4 vorhandenen abstandsgleich angeordnet sind, so dass der Deckel 10 gegenüber seiner Lage - wie aus Fig. 3 ersichtlich - lediglich um einige Zentimeter parallel nach vorne versetzt anzuordnen ist. Dabei ragt der Leuchtenfuß 6 mit seinem stirnseitigen Halteflansch 33 in eine Durchbrechung 34 der Sonnenblende 2 hinein oder ist durch diese hindurchgeführt und überragt die Sonnenblende 2 vorne geringfügig, so dass der Deckel 10 der Positionsleuchte 5 die Sonnenblende 2 vorne etwas überragt.

Der Leuchtenfuß 6 weist außerdem in seinem vorderen Bereich einen seitlich abragenden Tragarm 35 auf, an dem die Sonnenblende 2 abgestützt befestigbar ist. Der Tragarm 35 folgt zumindest im Auflagebereich der Sonnenblende 2 der Kontur von deren Innenseite. Außerdem erstreckt sich längs des Tragarmes 35 oben etwa mittig eine Nut 36, in der ein Sicherungsbügel 37 eingelegt ist, der nach Befestigung der Sonnenblende 2 mittels einer auch ihn selbst festlegenden Schraubverbindung 38 die Lage der aufgesetzten Sonnenblende 2 am Tragarm 35 sichert.

Der Leuchtenfuß 6 ist vorzugsweise durch ein einteiliges Kunststoffspritzgussteil gebildet.

Der Halter 13 bildet mit Sockel 16, Fassung 14 und Steckkontakten 17 ein separates Bauteil innerhalb der Positionsleuchte 5. Im Halter 13 ist ein Durchgangsloch 39 vorhanden, über das dieses Bauteil auf einem an der Innenseite der Frontscheibe 12 vorspringenden Zapfen 40 aufgenommen und so bei seiner Montage lagerichtig in Bezug auf den Deckel 10 anzuordnen ist. Außerdem ist dieses Bauteil nach Bestückung mit der Lampe 15 und dem Anschluss des Stromversorgungskabels 18 an den Steckkontakten 17 bei Befestigung des Deckels 10 an der Kraftfahrzeug-Außenwand/Frontwand 4 oder der Stirnseite des Leuchtenfußes 6 zwischen der Deckel-Frontscheibe 12 und dem Deckel-Randkörper 11 durch Anziehen der den Zapfen 40 durchdringenden Schraube 21 auch kraftschlüssig festlegbar.

## Patentansprüche

1. Positionsleuchte (5) an einem Kraftfahrzeug, insbesondere Lastkraftwagen, die in zwei verschiedenen Positionen entweder oberhalb von dessen Windschutzscheibe an der Außenwand des Kraftfahrzeugs oder im Bereich einer Sonnenschutzblende (2), die den oberen Bereich der Windschutzscheibe (3) beabstandet vor dieser überdeckt, befestigbar ist, wobei die Positionsleuchte (5) für beide Positionierungsmöglichkeiten identisch ist und für die Positionierung der Positionsleuchte (5) im Bereich der Sonnenschutzblende (2) ein Leuchtenfuß (6) vorgesehen ist, der auch als Träger für die Sonnenschutzblende (2) dient, **dadurch gekennzeichnet, dass** die Positionsleuchte (5) aus einem haubenartigen Deckel (10) mit Randkörper (11) und transparenter Frontscheibe (12) sowie einem inneren Halter (13) besteht, an dem ein Sockel (16) mit einer Fassung (14) für die Aufnahme einer Lampe (15) und Steckkontakte (17) für den Anschluss eines Stromversorgungskabels (18) angeordnet sind, und dass diese Positionsleuchte (5) mit ihrem Deckel (10)
a) wenn keine Sonnenblende (2) vorgesehen ist, direkt an der Außenwand (4) des Kraftfahrzeugs mittels zweier, entsprechende Schraubenlöcher (19, 20) durchdringender Schrauben (21, 22) befestigbar ist und sich dann der Halter (13) mit Sockel (16) und Fassung (14) mit Lampe (15) im Bereich einer auch der Durchführung des Stromversorgungskabels (18) dienenden Außenwandöffnung (23) befindet, dagegen
b) wenn eine Sonnenblende (2) vorgesehen ist, mittels der beiden in entsprechende Schraubenlöcher (25, 26) eingreifenden Schrauben (21, 22) stirnseitig am Leuchtenfuß (6) befestigbar ist, der wiederum genau an jener Stelle der Außenwand (4) des Kraftfahrzeugs befestigbar ist, an der im Falle des Fehlens der Sonnenschutzblende (2) die Positionsleuchte (5) selbst befestigbar ist, und an dem auch die Sonnenschutzblende (2) abgestützt befestigbar ist.

2. Positionsleuchte nach Anspruch 1, **dadurch gekennzeichnet, dass** der Leuchtenfuß (6)
- eine Grundplatte (27) mit einem Durchbruch (28) für die Durchführung des Stromversorgungskabels (18) aufweist, mit der er an der Außenwand (4) des Kraftfahrzeugs abgestützt und dort mittels Schrauben (29, 30) befestigbar ist, die dieselben Schraubenlöcher (19, 20) durchdringen, die für die Befestigung des Deckels (10) vorgesehen sind,
- einen an die Grundplatte (27) vorne anschließenden, der Durchführung des Stromversorgungskabels (18) dienenden hohlen Mittelabschnitt (31) mit einer seitlichen Ausbuchtung (32) solcher Größe aufweist, dass der Halter (13) mit Sockel (16) problemlos einbaubar ist und das Stromversorgungskabel (18) sauber verlegbar und mit den Steckkontakten (17) verbindbar ist,
- einen an den Mittelabschnitt (31) anschließenden, stirnseitigen Auflageflansch (33) für die Abstützung und Befestigung des Deckels (10) mit Schraubenlöchern (25, 26) aufweist, die den gleichen Abstand haben wie die Schraubenlöcher (19, 20) in der Kraftfahrzeug-Außenhaut (4), und
- in seinem vorderen Bereich einen seitlich abragenden Tragarm (35) aufweist, an dem die Sonnenblende (2) abstützbar und befestigbar ist.

3. Positionsleuchte nach Anspruch 2, **dadurch gekennzeichnet, dass** der Leuchtenfuß (6) mit seinem stirnseitigen Auflageflansch (33) in eine Durchbrechung (34) der Sonnenblende (2) hineinragt oder durch diese hindurchgeführt ist und die Sonnenblende (2) vorne geringfügig überragt, so dass der Deckel (10) der Positionsleuchte (5) die Sonnenblende (2) vorne überragt.

4. Positionsleuchte nach Anspruch 2, **dadurch gekennzeichnet, dass** der am Leuchtenfuß (6) seitlich abragende Tragarm (35) zumindest im Auflagebereich der Sonnenblende (2) der Kontur deren Innenseite folgt und dass sich längs des Tragarmes (35) eine Nut (36) erstreckt, in der ein Sicherungsbügel (37) eingelegt ist, der nach Befestigung der Sonnenblende (2) mittels einer auch ihn selbst festlegenden Schraubverbindung (38) die Lage der aufgesetzten Sonnenblende (2) am Tragarm (35) sichert.

5. Positionsleuchte nach einem der vorhergehenden Ansprüche 1 bis 4, **dadurch gekennzeichnet, dass** der Leuchtenfuß (6) durch ein einteiliges Kunststoffspritzgussteil gebildet ist.

6. Positionsleuchte nach Anspruch 1, **dadurch gekennzeichnet, dass** der Halter (13) mit Sockel (16), Fassung (14) und Steckkontakten (17) ein separates Bauteil bildet, das über den Halter (13) und ein darin befindliches Loch (39), das von einem an der Innenseite der Frontscheibe (12) vorspringenden Zapfen (40) durchdrungen wird, lagerichtig in Bezug auf den Deckel (10) anzuordnen und bei Befestigung des Deckels (10) an der Kraftfahrzeug-Außenwand (4) oder der Stirnseite des Leuchtenfußes (6) zwischen Deckel-Frontscheibe (12) und Deckel-Randkörper (11) durch Anziehen der auch den Zapfen (40) durchdringenden Schraube (21) kraftschlüssig festlegbar ist.

## Claims

1. Position lamp (5) on a motor vehicle, particularly a truck, which can be attached in two different positions either to the outer wall of the motor vehicle above the windscreen of said vehicle or to the area of a sunshade (2) located at a distance to and overlapping the upper area of said windscreen (3), whereby the position lamp (5) is identical for both positioning options and for positioning the position lamp (5) in the area of the sunshade (2) a lamp foot (6) is provided which doubles as carrier for the sunshade (2), **characterised in that** the position lamp (5) consists of a cap-type cover (10) with rim feature (11) and transparent front panel (12) and of an internal bracket (13) which accommodates a base (16) with a socket (14) for holding a bulb (15) and the plug contacts (17) for connecting up a power supply cable (18) and that this position lamp (5) with its cover (10),
a) if no sunshade (2) is provided, can be fastened directly to the outer wall (4) of the motor vehicle by means of two screws (21, 22) penetrating corresponding screw holes (19, 20) and that the bracket (13) with the base (16) and the socket (14) with the bulb (15) is then located in the area of an outer wall orifice (23) which also serves for passing through the power supply cable (18), whereas,
b) if a sunshade (2) is provided, can be fastened to the front face of the lamp foot (6) by means of the two screws (21, 22) penetrating the corresponding screw holes (25, 26), which lamp foot (6) can in turn be fastened to exactly that point on the outer wall (4) of the motor vehicle where, if the sunshade (2) is missing, the position lamp (5) itself can be fastened and where the sunshade itself (2) can be supported and fastened.

2. Position lamp according to Claim 1, **characterised in that** the lamp foot (6)
• has a base plate (27) with an orifice (28) for passing through the power supply cable (18), with which base plate (27) it is supported on the outer wall (4) of the motor vehicle where it can be fastened by means of screws (29, 30) which penetrate the same screw holes (19, 20) provided for fastening the cover (10),
• has a hollow centre section (31) adjacent to the front end of the base plate (27), provided for the passage of the power supply cable (18) and featuring a lateral protrusion (32) of such size that the bracket (13) with the base (16) can be installed without problem and the power supply cable (18) can be neatly routed and connected with the plug contacts (17),
• has a support flange (33) adjacent to the front end of the centre section (31), provided for supporting and fastening the cover (10) and featuring screw holes (25, 26) arranged the same distance apart as the screw holes. (19, 20) in the outer wall (4) of the motor vehicle, and
• has a support arm (35) which is arranged in its front section and projects laterally, whereby the sunshade (2) can be supported and fastened to said support arm (35).

3. Position lamp according to Claim 2, **characterised in that** the lamp foot (6) with its support flange (33) on the front face projects into an orifice (34) in the sunshade (2) or is passed through it and slightly projects beyond the sunshade (2) at the front, so that the cover (10) of the position lamp (5) projects beyond the sunshade (2) at the front.

4. Position lamp according to Claim 2, **characterised in that** the support arm (35) laterally projecting from the lamp foot (6) follows the contour of the inner side of the sunshade (2) at least in the support area of said sunshade (2) and that a groove (36) extends along the support arm (35), in which groove (36) a safety bow (37) is inserted which, after attachment of the sunshade (2) by means of a screwed connection (38) which also fixes said safety bow (37), secures the position of the attached sunshade (2) on the support arm (35).

5. Position lamp according to one of the foregoing Claims 1 to 4, **characterised in that** the lamp foot (6) is designed as a single-piece synthetic injection-moulded part.

6. Position lamp according to Claim 1, **characterised in that** the bracket (13) with base (16), socket (14) and plug contacts (17) forms a separate part which is to be arranged in the correct position relative to the cover (10) via the bracket (13) and a hole (39) provided in said bracket (13) and penetrated by a pin (40) projecting from the inside of the front panel (12) and which, upon attachment of the cover (10) to the vehicle outer wall (4) or to the front face of the lamp foot (6), can be positively fixed between the cover front panel (12) and the cover rim body (11) by tightening the screw (21), which also penetrates the pin (40).

## Revendications

1. Feu de position (5) sur un véhicule à moteur, en particulier un camion, pouvant être fixé dans deux positions différentes, soit au-dessus du pare-brise sur la paroi extérieure du véhicule à moteur, soit au niveau d'une visière pare-soleil (2) qui recouvre la partie supérieure du pare-brise (3) devant lui à une certaine distance, auquel cas le feu de position (5) est identique pour les deux possibilités de positionnement et il est prévu, pour le positionnement du feu de position (5) au niveau de la visière pare-soleil (2), un socle à feu (6) servant de support de visière pare-soleil (2), **caractérisé en ce que** le feu de position (5) se compose d'un cache de type cabochon (10) avec un élément de délimitation (11) et une vitre avant transparente (12), ainsi qu'un support intérieur (13) sur lequel sont disposés un socle (16) avec un châssis-support (14) pour recevoir une lampe (15) et des contacts enfichables (17) pour raccorder un câble d'alimentation électrique (18), et **en ce que** ce feu de position (5) avec son cabochon (10)
a) si aucune visière pare-soleil (2) n'est prévue, peut être fixé directement sur la paroi extérieure (4) du véhicule à moteur au moyen de deux vis (21, 22) pénétrant dans des trous de vis corresponds (19, 20) et le support (13) avec le socle (16) et le châssis-support (14) avec la lampe (15) se trouve au niveau d'une ouverture de la paroi extérieure (23) servant également à passer le câble d'alimentation électrique (18), et par contre
b) si une visière pare-soleil (2) est prévue, peut être fixé au moyen des deux vis (21, 22) vissée dans les trous de vis corresponds (25, 26) côté face avant dans le socle à feu (6), lequel peut à son tour être fixé exactement à l'endroit de la paroi extérieure (4) du véhicule à moteur, là où le feu de position (5) peut être fixé en cas d'absence de visière pare-soleil (2), et sur lequel la visière pare-soleil (2) peut également être fixée en appui.

2. Feu de position selon la revendication 1, **caractérisé en ce que** le socle à feu (6)
- présente une plaque de base (27) avec un passe-câble (28) pour passer le câble d'alimentation électrique (18), avec lequel il est en appui sur la paroi extérieure (4) du véhicule et peut être fixé à cet endroit au moyen de vis (29, 30) qui pénètrent dans les mêmes trous de vis (19, 20) prévus pour la fixation du cabochon (10),
- présente une partie centrale (31) creuse raccordée à l'avant sur la plaque de base (27) et servant à passer le câble d'alimentation électrique (18) avec une courbure latérale (32) d'une telle dimension que le support (13) avec le socle (16) peut être monté sans problème et que le câble d'alimentation électrique (18) peut être posé proprement et être raccordé aux contacts enfichables (17),
- présente une bride d'appui (33) côté face avant reliant la partie centrale (31) pour soutenir et fixer le cabochon (10) à l'aide de trous de vis (25, 26) qui ont un espacement identique que les trous de vis (19, 20) réalisés dans la paroi extérieure du véhicule à moteur (4), et
- présente un bras support (35) dépassant latéralement dans sa partie avant, sur lequel peut être appuyée et fixée la visière pare-soleil (2).

3. Feu de position selon la revendication 2, **caractérisé en ce que** le socle à feu (6) dépasse avec sa bride d'appui (33) côté face avant dans un passage (34) de la visière pare-soleil (2) ou est enfoncé à travers celui-ci et la visière pare-soleil (2) dépasse légèrement à l'avant de telle manière que le cabochon (10) du feu de position (5) dépasse à l'avant par rapport à la visière pare-soleil (2).

4. Feu de position selon la revendication 2, **caractérisé en ce que** le bras support (35) dépassant latéralement sur le socle à feu (6) suit au moins le contour de son côté intérieur dans la zone d'appui de la visière pare-soleil (2), et **en ce qu'**une gorge (36) s'étend le long du bras support (35) et reçoit une armature de fixation (37) qui garantit la position de la visière pare-soleil (2) posée sur le bras support (35) après la fixation de la visière pare-soleil (2) au moyen d'une liaison boulonnée (38) auto-serrante.

5. Feu de position selon l'une des revendications 1 à 4 mentionnés précédemment, **caractérisé en ce que** le socle à feu (6) est formé d'une pièce monobloc en plastique moulé par injection.

6. Feu de position selon la revendication 1, **caractérisé en ce que** le support (13) avec le socle (16), le châssis-support (14) et les contacts enfichables (17) forme un composant séparé à disposer exactement par rapport au cabochon (10) au-dessus du support (13) et un trou (39) se trouvant dedans, traversé par une cheville (40) en saillie sur le côté intérieur du pare-brise (12), et peut être fixé par adhérence lors de la fixation du cabochon (10) sur la paroi extérieure du véhicule à moteur (4) ou de la face avant du socle à feu (6) entre la vitre du cabochon (12) et l'élément de délimitation du cabochon (11) par un serrage de la vis (21) pénétrant également dans la cheville (40).
